# Europäisches Patentamt

## European Patent Office

## Office européen des brevets

(11) Veröffentlichungsnummer: **0 059 951**
**B1**

(12) **EUROPÄISCHE PATENTSCHRIFT**

(45) Veröffentlichungstag der Patentschrift:
**14.09.88**

(21) Anmeldenummer: **82101737.3**

(22) Anmeldetag: **05.03.82**

(51) Int. Cl.⁴: **G 03 F 3/08**

(54) **Verfahren zur Reproduktion farbiger Vorlagen im Vierfarbendruck unter Farbrücknahme.**

(30) Priorität: **11.03.81 DE 3109190**

(43) Veröffentlichungstag der Anmeldung:
**15.09.82 Patentblatt 82/37**

(45) Bekanntmachung des Hinweises auf die Patenterteilung:
**14.09.88 Patentblatt 88/37**

(84) Benannte Vertragsstaaten:
**AT BE CH DE FR GB IT LI NL SE**

(56) Entgegenhaltungen:
**DE - A - 3 015 396**

(73) Patentinhaber: **DR.-ING. RUDOLF HELL GmbH,
Grenzstrasse 1-5, D-2300 Kiel 14 (DE)**

(72) Erfinder: **Gaulke, Werner, Ostring 274,
D-2300 Kiel 14 (DE)**
Erfinder: **Jung, Eggert, Dr., Mühlenberg 25,
D-2306 Schönberg (DE)**

## Beschreibung

### Technisches Gebiet

Die vorliegende Erfindung betrifft ein Verfahren zur Reproduktion farbiger Vorlagen im Vierfarbendruck unter Farbrücknahme gemäss dem Oberbegriff des Anspruchs 1.

### Zugrundeliegender Stand der Technik

In der Drucktechnik wird bei der Reproduktion farbiger Vorlagen meistens der Vierfarbendruck angewendet, d.h., es werden Farbauszüge für die Druckfarben Gelb, Magenta, Cyan und Schwarz erstellt. Hätte man ein ideales Druckverfahren, ideale Druckfarben und Bedruckstoffe, so könnte man mit drei Druckfarben Gelb, Magenta und Cyan auskommen, um Schwarz zu drucken. In der Praxis erhält man aber beim Dreifarbendruck unter Verwendung der üblichen Europadruckfarben speziell beim Nass-in-Nass-Druck kontrastärmere Reproduktionen. Aus diesem Grunde wird üblicherweise im Vierfarbendruck mit dem zusätzlichen vierten Schwarzauszug gearbeitet, wobei für die anderen Druckfarben eine sogenannte Farbrücknahme durchgeführt werden kann. Dieses Verfahren wird in der Praxis oft mit «UCR» bezeichnet. Die Bezeichnung «UCR» stammt aus dem angelsächsischen und heisst: «Under Colour Removal». Die hiermit verbundenen reprotechnischen Zusammenhänge sowie die bei der Farbrücknahme auftretende Problematik sind z.B. in folgenden Aufsätzen beschrieben. Kodak, Die Reproduktion, Zeitschrift für den Repro-Fachmann, 13. Jahrgang, Kodak AG, Stuttgart-Wangen, Printed in Germany, MA 5584-0869-G, Seiten 14–26.

Sonderdruck aus dem Polygraph-Jahrbuch 1967, Verlagsort Frankfurt/Main, Aufsatz «Farbrücknahme auf elektronischem Wege» von Eberhard Hennig.

Da bei der Farbrücknahme weniger Farbe verdruckt werden muss, ergeben sich Vorteile im Nass-in-Nass-Druck, und der Farbverbrauch ist geringer. Weitere Vorteile der Farbrücknahme sind höhere Graustabilität, Drucksicherheit und grössere Kantenschärfe, denn neutrale Übergänge werden dann im wesentlichen nur mit Schwarz gedruckt. Passerfehler wirken sich somit im Gegensatz zum Normalverfahren weniger stark auf den Schärfeeindruck aus. Da bei der Farbrücknahme weniger Farbe verdruckt werden muss, ergeben sich Vorteile im Nass-in-Nass-Druck, und der Farbverbrauch ist geringer.

### Offenbarung der Erfindung

Aufgabe der vorliegenden Erfindung ist es, die Reproduktionsqualität im Vierfarbendruck durch eine modifizierte Farbrücknahme noch weiter zu verbessern.

Die Erfindung erreicht dies durch die im kennzeichnenden Teil des Anspruchs 1 angegebenen Merkmale. Vorteilhafte Weiterbildungen der Erfindung sind in den Unteransprüchen 2–8 angegeben.

### Kurze Beschreibung der Zeichnung

Die Erfindung wird im folgenden anhand der Figur näher erläutert, die eine grafische Darstellung der Farbrücknahme zeigt.

### Bester Weg zur Ausführung der Erfindung

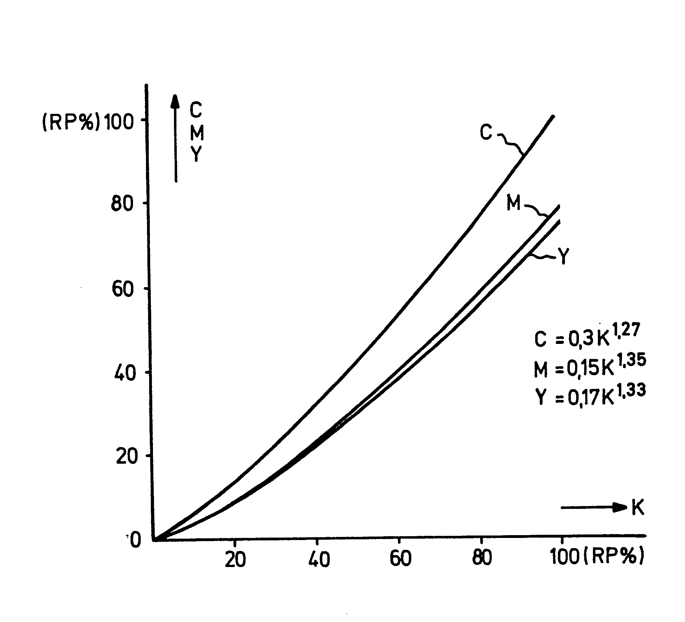

Die Figur zeigt ein Diagramm für die Ermittlung des prozentualen Schwarzwertes. In der modernen Drucktechnik werden farbige Originale mittels sogenannter Scanner optischelektrisch trichromatisch abgetastet, wobei sogenannte Farbmesswertsignale R, G, B gewonnen werden, die nach einer Digitalisierung einer weiteren Verarbeitung zur Herstellung der sogenannten Farbauszugssignale Gelb, Magenta, Cyan und Schwarz unterworfen werden, die im folgenden mit Y für Gelb, M für Magenta, C für Cyan und K für Schwarz bezeichnet werden. Solche Einrichtungen sind bekannt, wozu auf die DE-A-2 810 225 verwiesen wird. Die dort in Fig. 1 beschriebene Einrichtung weist neben dem Abtaster eine Bildsignalverarbeitungseinrichtung auf, die aus einem Steuerwerk, einem Arbeitsspeicher und einem Ausgangsspeicher besteht, in dem die letztlich ermittelten Farbauszugssignale für die Herstellung der Farbauszüge bereitgestellt werden. Die dingliche Herstellung der Farbauszüge wird ebenfalls mit solchen Geräten vorgenommen, wobei dem Ausgangsspeicher eine Aufzeichnungseinheit nachgeschaltet ist, die entweder eine Belichtungseinheit darstellt, mit deren Hilfe die Farbauszüge in Form von belichteten fotografischen Filmen, gravierten Druckformen oder sonstigen für den Farbdruck geeigneten Matrizen ausgegeben werden. Solche Einrichtungen sind z.B. in der DE-C-2 107 738, der US-A-3 582 549, der DE-A-2 161 038, der DE-B-2 725 093 und der DE-C-1 597 773 beschrieben. Da diese Aufzeichnungsverfahren dem Fachmann geläufig sind und die Ansteuerung der Aufzeichnungseinheit von gespeicherten Farbauszugssignalen erfolgt, wird hier nicht näher auf diese Aufzeichnungsverfahren im einzelnen eingegangen.

Die vorliegende Erfindung geht über die bekannten Farbrücknahmeverfahren hinaus. Es wird bei der Erfindung eine Modifikation der Farbrücknahme zwischen Graubereich und Farbbereich unterschieden. Unter Graubereich ist gemeint der Bereich um die Graugerade innerhalb des Farbraumes, wobei die Graugerade die Neutraldichten zwischen Schwarz und Weiss angibt. Der Farbbereich ist der Bereich des Farbraums, der um diese Graugerade herumliegt. Wie bereits erwähnt, wird bei der vorliegenden Erfindung davon ausgegangen, dass bei der Modifikation der Farbrücknahme zwischen Graubereich und Farbbereich unterschieden wird. In beiden Bereichen wird die Farbrücknahme unterschiedlich berechnet.

Im Graubereich wird die Farbrücknahme nach folgenden Formeln durchgeführt:

$$Y_g = Y_3(1-S_g)$$
$$M_g = M_3(1-S_g)$$
$$C_g = C_3(1-S_g)$$

wobei der Index «g» für die Druckfarbensignale nach der Farbrücknahme, der Index «3» für die Druckfarbensignale vor der Farbrücknahme und «$S_g$» die Stärke der Farbrücknahme im Graubereich angibt. Der Wert $S_g$ bewegt sich zwischen 0 für keine Farbrücknahme und 1 für maximale Farbrücknahme im Graubereich.

Das Druckfarbensignal für die Farbe Schwarz wird von dem Druckfarbensignal der Farbe Cyan ($C_3$) vor der Farbrücknahme abgeleitet, wobei die Graubalance berücksichtigt werden muss.

Die Figur zeigt den Zusammenhang zwischen den Kombinationen der drei Druckfarben Y M C, die benötigt werden, um im Zusammendruck einen gleichhellen Grauton wie die Druckfarbe Schwarz alleine, zu erhalten. Dieser Zusammenhang ist abhängig von den verwendeten Druckfarben und Druckverfahren und wird messtechnisch ermittelt. In der Figur sind drei Funktionen beispielhaft angegeben. Da die Druckfarbe Cyan in Grautönen gegenüber den beiden anderen bunten Druckfarben überwiegt, bestimmt sie die Flächendeckung für das Schwarz, das einen gleichhellen Grauton erzeugen soll. Im Diagramm der Figur kann sie durch die inverse Funktion

$$f^{-1}(C) = K$$

ermittelt werden. Somit ergibt sich für das Schwarz im Graubereich

$$K_g = S_g \, f^{-1}(C_3).$$

Im Farbbereich wird die Farbrücknahme anders vorgenommen, und zwar unterschieden danach, ob das Druckfarbensignal das minimale, mittlere oder maximale der 3 Signale ist. Die Formeln lauten dann

$$
\begin{aligned}
D_{4\,min} &= a_{min} \, D_{3\,min} \\
D_{4\,mitt} &= a_{mitt} \, D_{3\,mitt} \\
D_{4\,max} &= a_{max} \, D_{4\,max} \\
K_f &= a_k \, D_{3\,min}
\end{aligned}
$$

wobei

$D_{3\,min}$, $D_{3\,mitt}$, und $D_{3\,max}$: das minimale, mittlere und maximale Signal eines Farbtripels Y, M, C vor der Farbrücknahme und $a_{min}$, $a_{mitt}$, $a_{max}$ und $a_K$: Bewertungsfaktoren darstellen und $K_f$: das Druckfarbensignal für den Schwarzauszug und

$D_{4\,min}$, $D_{4\,mitt}$ und $D_{4\,max}$: die neuen Druckfarbensignale nach der Farbrücknahme darstellen.

Die Bewertungsfaktoren $a_k$, $a_{min}$, $a_{mitt}$ und $a_{max}$ werden nach den folgenden Gleichungen berechnet:

$$
\begin{aligned}
a_k &= b_1 \, S_f \\
a_{max} &= 1
\end{aligned}
$$

$$
\begin{aligned}
a_{mitt} &= 1 - S_f[b_2\{\alpha_3(D_{3\,max} - D_{3\,mitt})\}_1] \\
a_{min} &= 1 - S_f[b_3\{\alpha_1(D_{3\,max} - D_{3\,min})\}_1 + b_4\{\alpha_2(D_{3\,mitt} - D_{3\,min})\}_1]
\end{aligned}
$$

$S_f$ ist das Mass für die Farbrücknahme im Farbbereich und liegt zwischen $S_f = 0$ für keine und $S_f = 1$ für maximale Farbrücknahme.

$\alpha_1$, $\alpha_2$, $\alpha_3$ sind Bewertungsfaktoren für die Differenzen zwischen dem minimalen, mittleren und maximalen Signal. Sie legen die Grösse des Übergangsbereichs für einen verlaufenden Übergang zwischen den Bewertungsfaktoren für die einzelnen Signale fest. Der Index $\{...\}_1$ bedeutet, dass der Wert der Klammer auf 1 begrenzt wird. Die Gleichungen sind so gewählt, dass für beliebige Farbverläufe im Farbraum keine sprunghaften Änderungen in den Bewertungsfaktoren $a_{max}$, $a_{mitt}$ und $a_{min}$ auftreten.

Im vorliegenden Beispiel sind die Faktoren $b_1$ bis $b_4$ wie folgt gewählt:

$$
\begin{aligned}
b_1 &= 0{,}9 \\
b_2 &= 0{,}3 = b_3 \\
b_4 &= 0{,}4
\end{aligned}
$$

Die Faktoren $b_1$ bis $b_4$ können aber auch je nach Stärke der jeweiligen Rücknahme auch andere Werte annehmen.

Es wird angenommen, dass Gelb das minimale, Cyan das mittlere und Magenta das maximale Signal sind. In einem bestimmten Verlauf im Farbraum steigt nun beispielsweise das Gelb an und nähert sich der Grösse des Cyans, d.h. dem mittleren Signal. In den Bewertungsfaktoren wirkt sich das so aus, dass sich der Faktor $a_{min}$ dem Faktor $a_{mitt}$ annähert. Sind Cyan und Gelb gleichgross, so sind auch die Faktoren $a_{mitt}$ und $a_{min}$ gleichgross, nämlich

$$a_{mitt} = a_{min} = 1 - S_f[0{,}3\{\alpha_3(D_{3\,max} - D_{3\,mitt})\}_1]$$

Im Übergang zwischen Grau- und Farbbereich soll ebenfalls ein stetiger Verlauf zwischen den beiden vorgenannten Berechnungsweisen erfolgen. Dies wird mit Hilfe eines Graugewichtungssignals $\Delta$ erreicht, das vom Abstand des jeweiligen Farbortes von der Graugerade abhängt und nach folgenden Gleichungen berechnet wird

$$\Delta = (B \cdot \partial)_1$$

wobei B den Übergangsbereich zwischen Grau- und Farbbereich festlegt und $\partial$ den Abstand des jeweiligen Farbortes von der Graugeraden angibt und $(B \cdot \partial)_1$ die Begrenzung des Klammerwertes auf «1» bedeutet, wobei nach der Gleichung

$$\partial = \sqrt{(f^{-1}(C) - f^{-1}(M))^2 + (f^{-1}(M) - f^{-1}(Y))^2 + (f^{-1}(Y) - f^{-1}(C))^2}$$

berechnet wird.

Die Funktion f(Y), f(M) und f(C) bestimmen die Graubalance, wie sie in der Figur dargestellt ist.

Für die Berechnung des Graugewichtungssignals werden die entsprechenden inversen Funktionen $f^{-1}(Y)$, $f^{-1}(M)$ und $f^{-1}(C)$ benötigt.

Die Farbsignale, die sich für den Graubereich und den Farbbereich ergeben, werden mit Hilfe des Graugewichtungssignals nach folgenden Gleichungen zusammengefasst. Für die Buntfarben gilt

$$Y = Y_f + (1 - \Delta)Y_g$$
$$M = M_f + (1 - \Delta)M_g$$
$$C = C_f + (1 - \Delta)C_g$$

für Schwarz gilt

$$K = K_f + (1 - \Delta)K_g$$

Die Werte $Y_f$, $M_f$ und $C_f$ werden nach den Gleichungen für den Farbbereich berechnet, und zwar unterschiedlich in den drei Fällen, je nachdem, ob die Farbe das maximale, mittlere oder minimale Signal ist.

Durch die Unterscheidung nach Farb- und Graubereich kann die Farbrücknahme in beiden Bereichen unterschiedlich eingestellt werden, je nach Eigenschaft der benutzten Vorlage und des gewünschten Ergebnisses bei der Reproduktion. Darüber hinaus kann die Farbrücknahme im Graubereich in dunklen, mittleren und hellen Grautönen unterschiedlich eingestellt werden, indem man den Faktor $S_g$ in Abhängigkeit von der Helligkeit verändert.

Die in der Figur angegebene Masseinheit RP % für die Flächenbedeckung stellt eine im Offsetdruck übliche Masseinheit dar. Für andere Druckverfahren sind andere Masseinheiten üblich, z.B. im Tiefdruck wird in Dichte gerechnet, was aber für die Gültigkeit der Formeln ohne Bedeutung ist.

Die Realisierung der Farbrücknahme nach den vorgenannten Formeln kann in der Praxis auf unterschiedliche Weise durchgeführt werden. Der Fachmann kann auf übliche Mittel wie Nachbildung der Gleichungen durch käufliche analoge Schaltkreise, die von Halbleiter-Firmen angeboten werden, zurückgreifen. Es sei noch darauf hingewiesen, dass es für den Fachmann bei dem heutigen Stand der Technik keinerlei Schwierigkeiten bereitet, die in den Formeln vorkommenden Rechenoperationen mittels der käuflichen Addierer, Multiplizierer usw. durchzuführen. Es ist auch möglich, die Operation mittels eines Digitalrechners, z.B. eines Mikrocomputers, vorab zu berechnen und dann in einen Tabellenspeicher für die Durchführung der eigentlichen Farbrücknahme einzugeben.

Die erfindungsgemässe modifizierte Farbrücknahme erfolgt dann so, dass die Vorlage, wie eingangs erwähnt, mittels der bekannten Scanner optoelektronisch abgetastet wird, die dabei erhaltenen Farbsignale Y, M, C mittels des Tabellenspeichers, der die Zuordnung der Farbsignale vor der Farbrücknahme zu den Farbsignalen nach der Farbrücknahme enthält, in die Druckfarbensignale umgesetzt und mit deren Hilfe die Farbauszüge hergestellt werden. Solche Einrichtungen sind z.B. in der DE-B-10 53 311 oder DE-A-28 10 225 beschrieben. Die Verwendung eines Tabellenspeichers ist besonders vorteilhaft, da ein solcher Speicher leicht für eine andere Einstellung der Farbrücknahme umgeladen werden kann und auch während der Reproduktion die bei der Bildabtastung anfallenden Signale mit Hilfe dieses Tabellenspeichers mit hoher Geschwindigkeit in die entsprechenden Druckfarbensignale gewandelt werden können.

Gewerbliche Verwertbarkeit
Drucktechnik, Mehrfarbendruck.

**Patentansprüche**

1. Verfahren zur Reproduktion farbiger Vorlagen im Vierfarbendruck, bei dem die Farbvorlage trichromatisch abgetastet wird, die dabei gewonnenen Farbmesswertsignale, R, G, B in Druckfarbensignale Gelb (Y), Magenta (M), Cyan (C) und Schwarz (K) umgewandelt werden, die zur Herstellung der für den Vierfarbendruck verwendeten Farbauszüge dienen, wobei eine Farbrücknahme vorgenommen wird, dadurch gekennzeichnet, dass bei der Farbrücknahme zwischen Graubereich und Farbbereich der Vorlage unterschieden wird, im Graubereich eine Farbrücknahme vorgenommen wird, bei der eine zu den drei Druckfarbensignalen Y, M, C gehörige Graubalance berücksichtigt wird und dass im Farbbereich der Vorlage eine auf den jeweiligen Maximal-, Mittel- oder Minimalwert der drei Druckfarbensignale Y, M, C abgestimmte Farbrücknahme vorgenommen wird.

2. Verfahren nach Anspruch 1, dadurch gekennzeichnet, dass im Graubereich das Druckfarbensignal für Schwarz (K) von Cyan (C) abgeleitet wird.

3. Verfahren nach Anspruch 1 oder 2, dadurch gekennzeichnet, dass zwischen Graubereich und Farbbereich ein Verlauf zwischen den beiden für diese Bereiche charakteristischen Farbrücknahmen vorgenommen wird.

4. Verfahren nach einem der Ansprüche 1–3, dadurch gekennzeichnet, dass im Graubereich die Farbrücknahme nach folgenden Gleichungen vorgenommen wird

$$K_g = f^{-1}(C_3) S_g$$
$$Y_g = Y_3 (1 - S_g)$$
$$M_g = M_3 (1 - S_g)$$
$$C_g = C_3 (1 - S_g)$$

wobei:
$S_g$ das Mass der Farbrücknahme für den Graubereich mit $0 \le S_g \le 1$, $Y_3$, $M_3$, $C_3$ die Druckfarbensignale der drei bunten Farben ohne Farbrücknahme und
$K_g$, $Y_g$, $M_g$ und $C_g$ die Druckfarbensignale nach der Farbrücknahme für den Graubereich sind und $f^{-1}(C_3)$ die inverse Funktion von $C_3 = f(K)$ ist.

5. Verfahren nach einem der Ansprüche 1–4, dadurch gekennzeichnet, dass für die Farbrücknahme im Farbbereich die Farbauszugssignale nach folgenden Formeln berechnet werden:

$$K_f = a_K D_{3,min}$$
$$D_{4,min} = a_{min} D_{3,min}$$

$$D_{4,mitt} = a_{mitt}\, D_{3,mitt}$$
$$D_{4,max} = a_{max}\, D_{3,max}$$

wobei:

$D_{3,min}$, $D_{3,mitt}$ und $D_{3,max}$ jeweils das minimale, mittlere und maximale Signal eines Farbtripels (Y, M, C) vor der Farbrücknahme sind, $a_k$, $a_{min}$, $a_{mitt}$ und $a_{max}$ Bewertungsfaktoren darstellen, $K_f$ das Druckfarbensignal für den Schwarzauszug und $D_{4,min}$, $D_{4,mitt}$ und $D_{4,max}$ die Druckfarbensignale nach der Farbrücknahme für die drei bunten Farben darstellen und wobei die Faktoren $a_k$, $a_{min}$, $a_{mitt}$ und $a_{max}$ z.B. nach folgenden Gleichungen bestimmt werden:

$$a_k = b_1\, S_f$$
$$a_{max} = 1$$
$$a_{mitt} = 1 - S_f\,[b_2\,\{\alpha_3\,(D_{3,max} - D_{3,mitt})\}_1]$$
$$a_{min} = 1 - S_1\,[b_3\,\{\alpha_1\,(D_{3,max} - D_{3,min})\}_1 + b_4\,\{\alpha_2\,(D_{3,mitt} - D_{3,min})\}_1]$$

wobei $S_f$ das Mass für die Farbrücknahme im Farbbereich ist und $0 \leq S_f \leq 1$, $S_f = 0$ keine Farbrücknahme und $S_f = 1$ volle Farbrücknahme und

der Index $\{\ldots\}_1$ die Begrenzung der Klammer auf 1 darstellt, $\alpha_1$, $\alpha_2$, $\alpha_3$ die Grösse des Übergangsbereiches für den Verlauf zwischen $D_{3,max}$ und $D_{3,min}$ bzw. $D_{3,mitt}$ und $D_{3,min}$, und $D_{3,max}$ und $D_{3,mitt}$ festlegen, und die Faktoren $b_1$–$b_4$ ein Mass für die maximale Stärke der jeweiligen Rücknahme sind.

6. Verfahren nach einem der Ansprüche 1–5, dadurch gekennzeichnet, dass der Verlauf des Übergangs der Farbrücknahme zwischen Graubereich und Farbbereich entsprechend einem Graugewichtungssignal vorgenommen wird, das vom Abstand des jeweiligen Farbortes von der Graugerade abgeleitet und nach folgenden Gleichungen berechnet wird,

$$\Delta = \{\beta \cdot \partial\}_1$$

wobei $\Delta$ das Graugewichtungssignal, $\beta$ eine Grösse zur Bestimmung des Übergangsbereichs Grau-Farbe; $\partial$ den Abstand des jeweiligen Farbortes von der Graugeraden angibt und $\{\ldots\}_1$ die Begrenzung des Klammerwertes auf «1» bedeutet, wobei nach der Gleichung

$$\hat{c} = \sqrt{(f^{-1}(C) - f^{-1}(M))^2 + (f^{-1}(M) - f^{-1}(Y))^2 + (f^{-1}(Y) - f^{-1}(C))^2}$$

zur Berücksichtigung der jeweiligen Graubalance berechnet wird und $f^{-1}(Y)$, $f^{-1}(M)$ und $f^{-1}(C)$ die inversen Funktionen der Funktionen der Graubalance (Figur) sind.

7. Verfahren nach einem der Ansprüche 1–6, dadurch gekennzeichnet, dass die endgültigen Druckfarbensignale nach Berücksichtigung der Farbrücknahme im Graubereich und im Farbbereich sowie des Verlaufs zwischen Graubereich und Farbbereich nach folgenden Gleichungen vorgenommen wird

$$Y = Y_f + (1 - \Delta)\, Y_g$$
$$M = M_f + (1 - \Delta)\, M_g$$
$$C = C_f + (1 - \Delta)\, C_g$$
$$K = K_f + (1 - \Delta)\, K_g,$$

wobei die Werte $Y_f$, $M_f$, $C_f$ nach den Gleichungen für den Farbbereich berechnet wird, und zwar unterschiedlich je nachdem, ob die Signale jeweils das minimale, mittlere oder maximale Signal sind.

8. Verfahren nach einem der Ansprüche 1 bis 7, dadurch gekennzeichnet, dass die Druckfarbensignale zur Durchführung der eigentlichen Farbrücknahme nach erfolgter Berechnung einer bestimmten Farbrücknahme in einen Tabellenspeicher eingegeben werden.

9. Verfahren nach einem der Ansprüche 1–8, dadurch gekennzeichnet, dass die Stärke der Farbrücknahme im Graubereich von der Gradation abhängig ist.

**Claims**

1. Method for the reproduction of coloured originals in four-colour printing, in which the colour original is scanned trichromatically, the colour measurement value signals R, G, B thereby obtained are converted into printing ink signals yellow (Y), magenta (M), cyan (C) and black (K), which serve for the production of colour separations which are used for four-colour printing, whereby a colour removal is carried out, characterised in that in the colour removal a distinction is made between the grey range and the colour range of the original, in the grey range a colour removal is carried out, by which a grey balance belonging to the three printing ink signals Y, M, C is taken into account, and that in the colour range of the original, a colour removal is carried out which is coordinated with the respective maximum, mean or minimum value of the three printing ink signals Y, M, C.

2. Method according to Claim 1, characterised in that in the grey range the printing ink signal for black (K) is derived from cyan (C).

3. Method according to Claim 1 or 2, characterised in that between the grey range and the colour range, a course is carried out between the two for colour removals characteristic of these ranges.

4. Method according to one of Claims 1 to 3, characterised in that in the grey range, the colour removal is carried out according to the following equations:

$$K_g = f^{-1}(C_3)\, S_g$$
$$Y_g = Y_3\,(1 - S_g)$$
$$M_g = M_3\,(1 - S_g)$$
$$C_g = C_3\,(1 - S_g)$$

wherein:

$S_g$ is the extent of the colour removal for the grey range with $0 \leq S_g \leq 1$, $Y_3$, $M_3$, $C_3$ the printing

ink signals of the three coloured colours without colour removal and $K_g$, $Y_g$, $M_g$ and $C_g$ are the printing ink signals after colour removal for the grey range, and $F^{-1}(C_3)$ is the inverse function of $C_3 = f(K)$.

5. Method according to one of Claims 1 to 4, characterised in that for the colour removal in the colour range, the colour separation signals are calculated according to the following formulae:

$$
\begin{aligned}
K_f &= a_k\, D_{3,min} \\
D_{4,min} &= a_{min}\, D_{3,min} \\
D_{4,mean} &= a_{mean}\, D_{3,mean} \\
D_{4,max} &= a_{max}\, D_{3,max}
\end{aligned}
$$

wherein:

$D_{3,min}$, $D_{3,mean}$ and $D_{3,max}$ respective are the minimum, mean and the maximum signal for a colour triple (Y, M, C) before the colour removal, $a_k$, $a_{min}$, $a_{mean}$ and $a_{max}$ represent evaluation factors, $K_f$ represents the printing ink signal for the black separation and $D_{4,min}$, $D_{4,mean}$ and $D_{4,max}$ represent the printing ink signals after the colour removal for the three colours, and in which the factors $a_k$, $a_{min}$, $a_{mean}$ and $a_{max}$ are determined, for example, according to the following equations:

$$
\begin{aligned}
a_k &= b_1 S_f \\
a_{max} &= 1 \\
a_{mean} &= 1 - S_f\, [b_2\, \{\alpha_3(D_{3,max} - D_{3,mean})\}_1]
\end{aligned}
$$

$$
a_{min} = 1 - S_f\, [b_3\, \{\alpha_1(D_{3,max} - D_{3,min})\}_1 + b_4\, \{\alpha_2(D_{3,mean} - D_{3,min})\}_1]
$$

wherein $S_f$ is the extent of the colour removal in the colour range and $0 \leq S_f \leq 1$, $S_f = 0$ represents no colour removal and $S_f = 1$ represents full colour removal and the index $\{...\}_1$ represents the limitation of the parenthesis to 1, $\alpha_1$, $\alpha_2$, $\alpha_3$ determine the extent of the transition range for the course between $D_{3,max}$ and $D_{3,min}$ or respectively $D_{3,mean}$ and $D_{3,min}$, and $D_{3,max}$ and $D_{3,mean}$, and the factors $b_1$–$b_4$ are a measurement for the maximum intensity of the respective removal.

6. Method according to one of Claims 1 to 5, characterised in that the course of the transition of the colour removal between the grey range and the colour range is carried out according to a grey weighting signal, which is derived from the distance of the respective colour locations from the grey line and is calculated according to the following equations:

$$
\Delta = \{\beta \cdot \partial\}_1
$$

in which $\Delta$ denotes the grey weighting signal, $\beta$ denotes a quantity to determine the transition range grey-colour; $\partial$ indicates the distance of the respective colour locations from the grey line and $\{...\}$ denotes the limitation of the parenthesis value to "1", in which calculations are carried out according to the equation

$$
\partial = \sqrt{(f^{-1}(C) - f^{-1}(M))^2 + (f^{-1}(M) - f^{-1}(Y))^2 + (f^{-1}(Y) - f^{-1}(C))^2}
$$

to take into account the respective grey balance, and $f^{-1}(Y)$, $f^{-1}(M)$ and $f^{-1}(C)$ are the inverse functions of the grey balance (figure).

7. Method according to one of Claims 1 to 6, characterised in that the final printing ink signals, after taking into account the colour removal in the grey range and in the colour range and also the course between the grey range and the colour range, is carried out according to the following equations:

$$
\begin{aligned}
Y &= Y_f + (1 - \Delta)\, Y_g \\
M &= M_f + (1 - \Delta)\, M_g \\
C &= C_f + (1 - \Delta)\, C_g \\
K &= K_f + (1 - \Delta)\, K_g,
\end{aligned}
$$

in which the values $Y_f$, $M_f$, $C_f$ are calculated according to the equations for the colour range, that is in a different manner depending on whether the signals are respectively the minimum, mean or maximum signal.

8. Method according to one of Claims 1 to 7, characterised in that the printing ink signals, to carry out the actual colour removal after the calculation of a particular colour removal has been completed, are fed into a table memory.

9. Method according to one of Claims 1 to 8, characterised in that the intensity of the colour removal in the grey range is dependent on the gradation.

**Revendications**

1. Procédé de reproduction de modèles en couleur en impression quadrichronique pour lequel le modèle de couleur est balayé en trichromie, les signaux de valeur de mesure des couleurs ainsi obtenus R, G, B sont transformés en signaux de couleur d'impression Jaune (Y), Magenta (M), Bleu (C) et Noir (K), qui servent pour l'obtention des extraits de couleur utilisés pour l'impression en quadrichromie, pour laquelle une reprise de la couleur est entreprise, caractérisée en ce que, lors de la reprise des couleurs entre la zone du gris et la zone de couleur, le modèle est différencié dans la zone du gris, une reprise de la couleur est entreprise pour laquelle une balance du gris appartenant aux trois signaux de couleurs de l'impression Y, M et C est prise en considération et que dans la zone de couleur du modèle, une reprise des couleurs mise en harmonie avec les valeurs respectives maximales, médianes ou minimales des trois signaux de couleurs d'impression Y, M et C est effectuée.

2. Procédé selon la revendication 1 caractérisé en ce que dans la zone du gris, le signal de la couleur d'impression pour le Noir (K) est dérivée du Bleu (C).

3. Procédé selon la revendication 1 ou 2 caractérisé en ce que, entre la zone du gris et la zone de couleur, un déplacement est effectué entre les deux reprises de couleur caractéristiques de ces zones.

4. Procédé selon une des revendications 1 à 3 caractérisé en ce que dans la zone du gris, la reprise de couleur est entreprise selon les égalités suivantes:

$$K_g = f^{-1}(C_3) S_g$$
$$Y_g = Y_3 (1 - S_g)$$
$$M_g = M_3 (1 - S_g)$$
$$C_g = C_3 (1 - S_g)$$

pour lesquelles:

$S_q$ est la masse de la reprise de couleur pour le domaine du gris avec $0 \leq S_g \leq 1$, $Y_3$, $M_3$, et $C_3$, les signaux couleur d'impression des trois couleurs variées sans reprise de couleur et $K_g$, $Y_g$, $M_g$ et $C_g$ sont les signaux de couleurs d'impression après la reprise des couleurs pour la zone du gris et $f^{-1}(C_3)$ est la fonction inverse de $C_3 = f(K)$.

5. Procédé selon l'une des revendications 1 à 4 caractérisé en ce que pour la reprise des couleurs dans la zone des couleurs, les signaux de sortie des couleurs sont calculés selon les formules suivantes:

$$K_f = a_K D_{3,minum}$$
$$D_{4,minum} = a_{minum} D_{3,minum}$$
$$D_{4,milieu} = a_{milieu} D_{3,milieu}$$
$$D_{4,max} = a_{max} D_{3,max}$$

dans lesquelles:

$D_{3,minum}$, $D_{3,milieu}$ et $D_{3,max}$ respectivement sont le signal minimal, médian ou maximal d'un triplé de couleurs (Y, M et C) avant la reprise des couleurs, $a_K$, $a_{minum}$, $a_{milieu}$ et $a_{max}$, des facteurs de détermination, $K_f$ représente le signal de couleur de l'impression pour la sortie en noir et $D_{4,minum}$, $D_{4,moyen}$ et $D_{4,max}$ le signal des couleurs d'impression après la reprise de couleur pour les trois couleurs différentes et pour lequel des trois facteurs $a_K$, $a_{minum}$, $a_{milieu}$ et $a_{max}$ par exemple sont déterminés selon les égalités suivantes:

$$a_k = b_1 S_f$$
$$a_{max} = 1$$
$$a_{milieu} = 1 - S_f [b_2 \{\alpha_3(D_{3,max} - D_{3,milieu})\}_1]$$
$$a_{minum} = 1 - S_1 [b_3 \{\alpha_1(D_{3,max} - D_{3,minum})\}_1$$
$$+ b_4\{\alpha_2(D_{3,milieu} - D_{3,min})\}_1]$$

dans lesquelles $S_f$ représente la mesure pour la reprise de couleur dans la zone de couleur et $0 \leq S_f \leq 1$, $S_f = 0$ représente une absence de reprise de couleur et $S_f = 1$ une reprise de couleur complète et l'indice $\{...\}_1$ la limitation des parenthèses de la valeur 1, $\alpha_1$, $\alpha_2$ et $\alpha_3$ représentent la grandeur du domaine de transition pour la gradation entre $D_{3,max}$ et $D_{3,minum}$, et $D_{3,max}$ et $D_{3,milieu}$ et les facteurs $b_1$ et $b_4$ sont une mesure pour la puissance maximale de la reprise respective.

6. Un procédé selon une des revendications 1 à 5 caractérisé en ce que le trajet de la transition de la reprise de couleur entre la zone du gris et la zone de couleur est entrepris d'une manière correspondant à un signal de pondération du gris qui découle de la distance du lieu de la couleur, respectif, à la ligne droite du gris et est calculé d'après les équations suivantes:

$$\Delta = \{\beta \cdot \partial\}_1$$

dans lesquelles $\Delta$ est le signal de pondération du gris. $\beta$ et une grandeur pour la détermination de la zone de transition du gris à la couleur, $\partial$ est la distance du lieu respectif de la couleur de la ligne droite du gris et $\{...\}_1$ représente la limitation de la valeur de la parenthèse à «1», pour laquelle selon l'équation

$$\partial = \sqrt{(f^{-1}(C) - f^{-1}(M))^2 + (f^{-1}(M) - f^{-1}(Y))^2 + (f^{-1}(Y) - f^{-1}(C))^2}$$

on calcule pour prendre en compte la balance respective du gris et $f^{-1}(Y)$, $f^{-1}(M)$ et $f^{-1}(C)$ sont des fonctions inverses des fonctions de la balance du gris (voir figure).

7. Procédé selon l'une des revendications 1 à 6 caractérisé en ce que le signal de couleur de pression définitif est entrepris après prise en compte de la reprise de couleur dans la zone du gris et dans la zone de couleur ainsi que de la gradation entre la zone du gris et la zone de couleur, selon les équations suivantes:

$$Y = Y_f + (1 - \Delta) Y_g$$
$$M = M_f + (1 - \Delta) M_g$$
$$C = C_f + (1 - \Delta) C_g$$
$$K = K_f + (1 - \Delta) K_g$$

dans lesquelles les valeurs $Y_f$, $M_f$ et $C_f$ sont déterminées d'après les équations pour la zone de couleur et certes chacune différentes selon que les signaux respectifs sont minimaux, medians ou maximaux.

8. Procédé selon l'une des revendications 1 à 7 caractérisé en ce que les signaux de couleurs et d'impression pour la réalisation d'une reprise de couleur particulière après calcul effectué d'une reprise déterminée de couleur, sont présentés dans une mémoire à tableaux.

9. Procédé selon l'une des revendications 1 à 8 caractérisé en ce que la puissance de reprise de couleur dans la zone du gris est dépendante de la gradation.

$$C = 0,3 K^{1,27}$$
$$M = 0,15 K^{1,35}$$
$$Y = 0,17 K^{1,33}$$